# EUROPEAN PATENT APPLICATION

(11) **EP 4 732 912 A2**
(43) Date of publication of application: **29.04.2026**
(21) Application number: 25203493.9
(22) Date of filing: 19.09.2025
(51) Int. Cl.: A62C 3/16, H01M 10/42, H01M 10/613, H01M 50/383

(54) **BATTERY PACK AND ENERGY STORAGE SYSTEM INCLUDING SAME**

(30) Priority: 25.10.2024 KR 20240147733
(71) Applicant: SAMSUNG SDI CO., LTD., Yongin-si, Gyeonggi-do 17084 (KR)
(72) Inventor: HAN, Jinho, 17084 Yongin-Si (KR)
(74) Representative: Marks & Clerk LLP

(57) **Abstract**

The present disclosure provides a battery pack and an energy storage system including the same. The battery pack may include a case having an accommodating space therein, a battery module comprising a plurality of battery cells arranged in the accommodating space, and an extinguishing tube placed on the battery module, and the extinguishing tube may include a tube cover filled with a filler and a plurality of spraying units formed on the tube cover.

## Description

### FIELD

The present disclosure relates to a battery pack and an energy storage system including the same.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An energy storage system (ESS) may refer to a system for storing produced electric energy using lithium-ion batteries, etc. and then using it when needed. Such an ESS enables energy to be used efficiently at all stages of power generation, power transmission, substations, distribution, and receipt.

Meanwhile, a battery assembly used for an energy storage system may include a plurality of lithium-ion batteries. Lithium-ion batteries are energy efficient, but have a higher risk of fire than nickel-cadmium or nickel-metal hydride batteries. When thermal runaway occurs in such lithium-ion batteries, it may result in fire or explosion and the spread of the thermal runaway to adjacent battery cells. When the spread of thermal runaway occurs, the fire is difficult to extinguish due to the high fire intensity and the risk of subsequent explosions.

The above information disclosed in this Background section is for enhancement of understanding of the background of the present disclosure, and therefore, it may contain information that does not constitute related (or prior) art.

### SUMMARY

Embodiments of the present disclosure provide a battery pack and an energy storage system including the same for the purpose of solving the above-mentioned problem.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

According to some embodiments of the present disclosure, a battery pack may include a case having an accommodating space therein, a battery module including a plurality of battery cells arranged in the accommodating space, and an extinguishing tube placed on the battery module, and the extinguishing tube includes a tube cover filled with a filler and a plurality of spraying units formed on the tube cover.

According to some embodiments of the present disclosure, each of the plurality of battery cells may include a case having an opening formed on one end, a cap plate coupled to the opening of the case and having a vent hole, and a vent portion placed on the vent hole, and each of the plurality of spraying units may be positioned at a position corresponding to the vent portion of each of the plurality of battery cells.

According to some embodiments of the present disclosure, the filler may contain a flame-retardant material.

According to some embodiments of the present disclosure, the flame-retardant material may contain silicone having viscosity.

According to some embodiments of the present disclosure, each of the plurality of spraying units may be formed in a shape of a funnel becoming narrower toward the battery module.

According to some embodiments of the present disclosure, the battery pack may include a connecting assembly arranged on the battery module and including a plurality of bus bars that electrically connect the plurality of battery cells and a bus bar holder that supports the plurality of bus bars and a top plate placed on the connecting assembly, and the extinguishing tube may be disposed between the connecting assembly and the top plate.

According to some embodiments of the present disclosure, the plurality of spraying units may include a heat-sensitive member having a lower melting point than the tube cover.

According to some embodiments of the present disclosure, the battery pack may include an extinguishing pipe arranged in the accommodating space between the battery module and the extinguishing tube and filled with a fire extinguishing agent.

According to some embodiments of the present disclosure, the battery pack may include a heating member placed adjacent to the extinguishing pipe, and a melting point of the extinguishing pipe may be equal to or higher than a melting point of the plurality of spraying units.

According to some embodiments of the present disclosure, the battery pack may include an insulating plate positioned between the battery cells adjacent to each other among the plurality of battery cells.

According to some embodiments of the present disclosure, an energy storage system includes one or more battery racks accommodating a plurality of battery packs, an extinguishing device connected to the one or more battery racks, and a battery management system (BMS) connected to the one or more battery racks and the extinguishing device. Each of the plurality of battery packs includes a case having an accommodating space therein, a battery module including a plurality of battery cells arranged in the accommodating space, and an extinguishing tube placed on the battery module, and the extinguishing tube includes a tube cover filled with a filler and a plurality of spraying units formed on the tube cover.

At least some of the above and other features of the invention are set out in the claims.

According to some embodiments of the present disclosure, a viscous flame-retardant material may be applied onto an upper portion of a battery cell before thermal runaway occurs due to fire, so that the movement of internal fragments generated by an explosion, etc. may be suppressed. Accordingly, it may be possible to prevent further spread of the fire by internal fragments until a fire extinguishing agent is sprayed and the battery cell is extinguished.

According to some embodiments of the present disclosure, it may be possible to sense fire and spray a fire extinguishing agent to extinguish the fire at an early stage before thermal runaway occurs due to the fire. Accordingly, the thermal runaway may be prevented from spreading to nearby battery cells, thereby minimizing damage caused by the fire.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a battery cell according to some embodiments of the present disclosure;
FIG. 2 illustrates a cross-section of the battery cell according to some embodiments of the present disclosure;
FIG. 3 is an exploded perspective view of a battery pack according to some embodiments of the present disclosure;
FIG. 4 is an exploded perspective view of the battery pack according to some embodiments of the present disclosure;
FIG. 5 shows how a filler is sprayed from an extinguishing tube onto the upper portion of the battery cell according to some embodiments of the present disclosure;
FIG. 6 illustrates an energy storage system according to some embodiments of the present disclosure;
FIG. 7 shows how a fire extinguishing agent is sprayed from an extinguishing pipe according to some embodiments of the present disclosure;
FIG. 8 shows an example of a heating member in contact with the extinguishing pipe according to some embodiments of the present disclosure; and
FIG. 9 is a flowchart for illustrating an example of a method of suppressing a fire in an energy storage system according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects, and features of the present disclosure. Accordingly, it should be understood that there may be various equivalents and modifications that can replace or modify the embodiments described herein at the time of filing this application.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components".

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

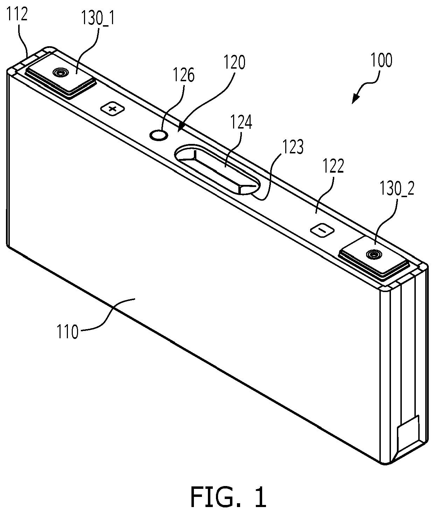

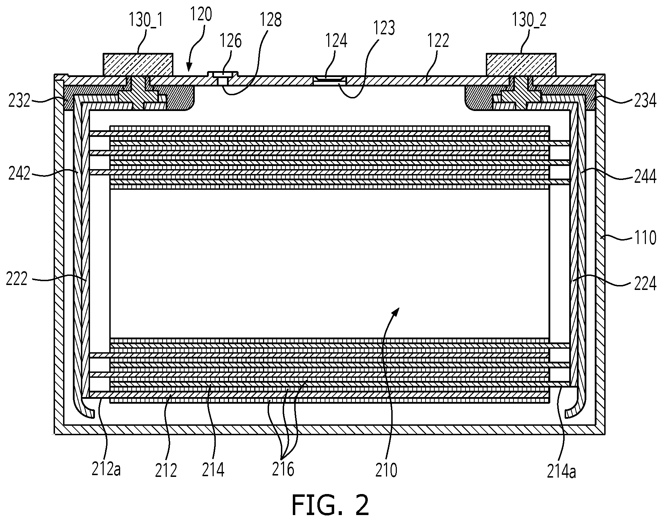

FIG. 1 illustrates a battery cell 100 according to some embodiments of the present disclosure, and FIG. 2 illustrates a cross-section of the battery cell 100 according to some embodiments of the present disclosure. Referring to FIGS. 1 and 2, the battery cell 100 according to an example embodiment may include at least one electrode assembly 210 wound with a separator 216 as an insulator between a positive electrode 212 and a negative electrode 214, a case 110 having the electrode assembly 210 built therein and an opening 112 formed at one end, and a cap assembly 120 coupled to the opening 112 of the case 110.

As an example, the battery cell or cell 100 may be a lithium-ion secondary battery in a rectangular shape. However, the present disclosure is not limited thereto, and can be applied to various types of batteries, such as a pouch-shaped battery or a cylindrical battery.

The positive electrode 212 and the negative electrode 214 may include a coated portion, which is a region where an active material is applied to a current collector formed of a thin metal foil, and a non-coated portion 212a and 214a, which is a region where the active material is not applied. In embodiments, the coated portion of the positive electrode 212 may be coated with a positive electrode active material such as a transition metal oxide on a positive electrode plate formed of a metal foil such as aluminum or an aluminum alloy. The positive electrode active material may further include a binder and/or a conductive agent. In addition, the coated portion of the negative electrode 214 may be coated with a negative electrode active material such as graphite or carbon on a negative electrode plate formed of a metal foil such as copper, a copper alloy, nickel, or a nickel alloy. The negative electrode active material may further include a binder and/or a conductive agent.

The positive electrode 212 and the negative electrode 214 may be wound with the separator 216, which is an insulator, interposed therebetween. However, the present disclosure is not limited thereto, and the electrode assembly 210 described above may be formed in a structure where the positive electrode and the negative electrode including a plurality of sheets are alternately stacked with the separator 216 interposed therebetween.

The case 110 may form the overall appearance of the battery cell 100 and may be formed of a conductive metal such as aluminum, an aluminum alloy, or a nickel-plated steel. In addition, the case 110 may have the opening 112 formed at one end and may provide a space where the electrode assembly 210 is accommodated.

The cap assembly 120 may include a cap plate 122 covering the opening 112 of the case 110, and the case 110 and the cap plate 122 may be made of a conductive material. Here, a first terminal 130_1 and a second terminal 130_2 electrically connected to the positive electrode 212 or the negative electrode 214 may be installed to penetrate the cap plate 122 and protrude outward. The first terminal 130_1 may be a positive terminal, and the second terminal 130_2 may be a negative terminal. Of course, the opposite is also true.

The cap plate 122 may be formed as a thin plate and may be coupled to the opening 112 of the case 110. The first terminal 130_1 and the second terminal 130_2 protruding outward from the cap plate 122 may be in a rivet structure and may be riveted, or may be coupled to the cap plate 122 by welding.

In addition, a vent hole 123 may be formed at any point on the cap plate 122, and a vent portion 124 with a notch may be placed on the vent hole 123. An electrolyte injection hole 128 on which a sealing plug 126 may be installed may be formed on the cap plate 122.

The first terminal 130_1 and the second terminal 130_2 may be electrically connected to a current collector including first and second current collectors 222 and 224 (hereinafter, referred to as positive and negative current collectors) welded to the positive electrode uncoated portion 212a or the negative electrode uncoated portion 214a.

For example, the first terminal 130_1 and the second terminal 130_2 may be coupled to the positive and negative current collectors 222 and 224 by welding. However, the present disclosure is not limited thereto, and the first and second terminals 130_1 and 130_2 and the positive and negative current collectors 222 and 224 may be formed as one piece.

In addition, an insulating member may be installed between the electrode assembly 210 and the cap plate 122. Here, the insulating member may include first and second sub-insulating-members 232 and 234, and each of the first and second sub-insulating-members 232 and 234 may be installed between the electrode assembly 210 and the cap plate 122.

In addition, according to the illustrated example embodiment, one end of a separating member that may be installed facing one side of the electrode assembly 210 may be installed between the insulating member and the positive and negative electrode terminals 130_1 and 130_2. Here, the separating member may include first and second separating members 242 and 244.

Accordingly, one end of each of the first and second separating members 242 and 244 that may be installed facing one side of the electrode assembly 210 may be installed between the first and second sub-insulating-members 232 and 234 and the first and second terminals 130_1 and 130_2.

Finally, it may be possible that the first and second terminals 130_1 and 130_2 welded to the positive and negative current collectors 222 and 224, respectively, are coupled to one end of each of the first and second sub-insulating-members 232 and 234 and the first and second separating members 242 and 244.

The battery cell 100 may be a lithium battery cell, a sodium battery cell, etc. However, the scope of the present disclosure is not limited thereto, and examples of the battery cell 100 may include all cells that can repeatedly provide electricity by charging and discharging. In embodiments, when the battery cell 100 is a lithium battery cell, it can be used for electric vehicles (EV) because it has excellent life and high-rate properties. For example, it can be used for hybrid vehicles such as plug-in hybrid electric vehicles (PHEV). In addition, lithium battery cells can be used in fields that require storage of a large amount of power, such as electric bicycles, power tools, and energy storage systems.

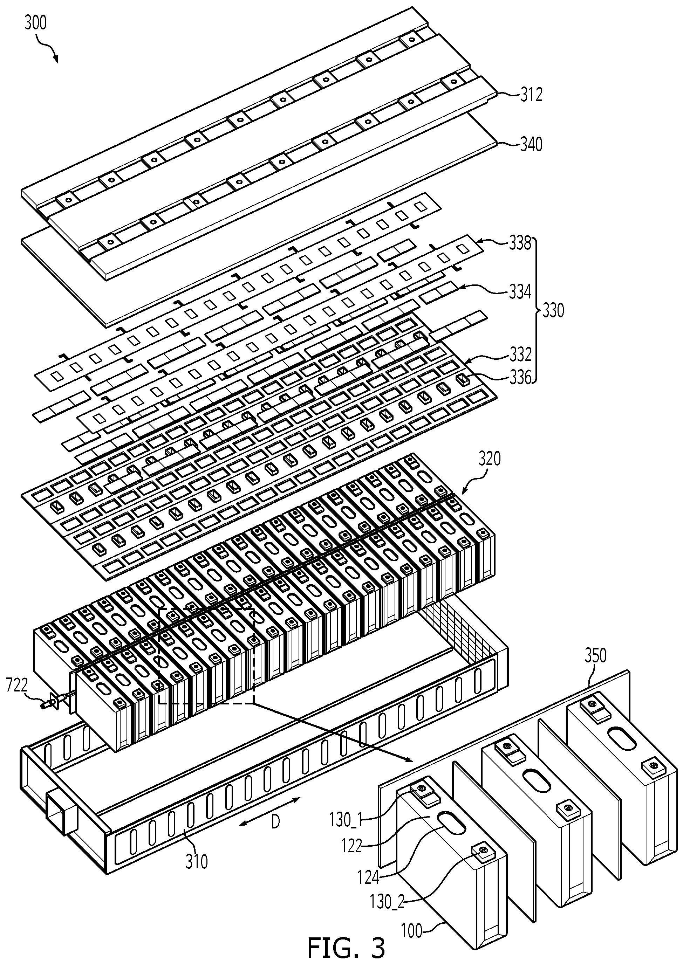

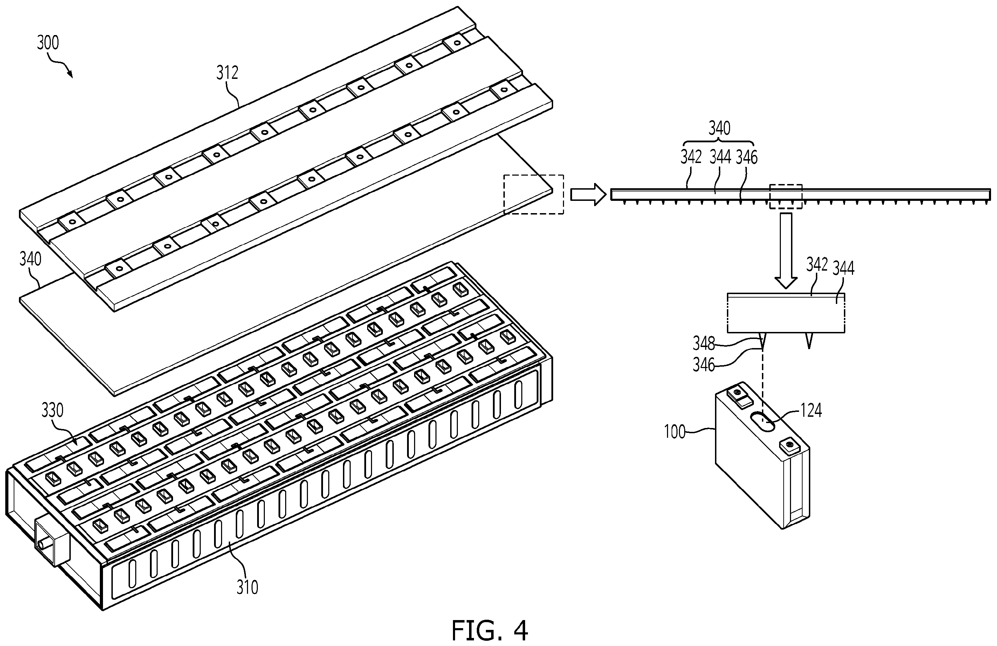

FIGS. 3 and 4 are exploded perspective views of a battery pack 300 according to some embodiments of the present disclosure. Referring to FIG. 3, the battery pack 300 may include a frame 310 having an accommodating space therein, a battery module 320 including a plurality of battery cells 100 arranged in the accommodating space, and an extinguishing tube 340 placed on the battery module 320. In embodiments, the battery pack 300 may be included in a vehicle, an energy storage system, etc.

In embodiments, the frame 310 may be a structure for accommodating or supporting the battery module 320. The frame 310 may have one open side to have the accommodating space therein. The frame 310 may be formed in the shape of a rectangular box extending in a front-back direction D. However, it is not limited thereto, and may be formed in various shapes based on the shape of the battery module 320 accommodated therein. At least a portion of the frame 310 may contain a plastic composite. For example, at least a portion of the frame 310 may contain a woven or laminated flame-retardant composite material containing at least one of a fiber-reinforced composite and a plastic composite, and may be coated on an outer and/or inner surface with a flame-retardant coating agent. For example, the plastic composite may contain, as a thermoplastic resin, at least one of polypropylene, polyamide 6, polyamide 66, polycarbonate, polyphenylene ether, and polyurethane.

A top plate 312 may be placed on the frame 310. The frame 310 and the top plate 312 may be formed as one piece or separately. The top plate 312 may contain the same material as the frame 310. As the top plate 312 is positioned on the frame 310, it may be possible to suppress or delay the spread of a fire event occurring in the accommodating space in the frame 310.

In embodiments, the battery module 320 may include the plurality of battery cells 100. The plurality of battery cells 100 may include one or more rows of groups of the battery cells 100 facing each other on their wide surfaces in the front-back direction D. FIG. 3 shows the plurality of battery cells 100 arranged in two rows within the battery module 320. However, the present disclosure is not limited thereto, and they may be arranged in one or more rows. The features of the battery cell 100 have been disclosed in detail with reference to FIGS. 1 and 2.

The extinguishing tube 340 may be placed on the battery module 320. A detailed description of the extinguishing tube 340 will be disclosed below with reference to FIG. 4.

In embodiments, the battery pack 300 may include a connecting assembly 330 disposed on the battery module 320 and accommodated in the accommodating space in the frame 310. The connecting assembly 330 may include a busbar holder 332, a busbar 334, and a circuit 338. The busbar holder 332 may be positioned on the cap plate 122 as shown in FIG. 3 and may support the busbar 334. For example, the busbar holder 332 may be a plate in a rectangle-like shape and may include an insulating material. The busbar holder 332 may have a plurality of exposing portions formed to expose the first terminal 130_1 and the second terminal 130_2 of the cap plate 122. The bus bar 334 may be electrically connected to the first terminal 130_1 and the second terminal 130_2 through the exposing portion formed on the bus bar holder 332. A plurality of penetrating portions 336 may be formed on the bus bar holder 332. The penetrating portion 336 may be formed to penetrate the bus bar holder 332. Here, the penetrating portion 336 may be formed at a position corresponding to the vent portion 124 of each battery cell 100. Accordingly, the penetrating portion 336 may serve as a passage through which vent gas discharged through the vent portion 124 flows. In addition, the penetrating portion 336 may serve as a passage through which a fire extinguishing agent moves in the event of a fire inside the battery pack 300. In the drawing, the penetrating portion 336 is in a shape of a rectangular column. However, the present disclosure is not limited thereto, and the penetrating portion 336 may be formed in various shapes such as a cylinder pillar, a polygonal pillar, and a narrow and long slit. For example, the shape of the penetrating portion 336 may be determined based on the shape of the vent portion 124.

The bus bar 334 may electrically connect the first terminal 130_1 and the second terminal 130_2. The bus bar 334 may connect the plurality of battery cells 100 in series and/or in parallel. For this purpose, a plurality of bus bars 334 may be provided. The bus bar 334 may electrically connect the first terminal 130_1 of the battery cell 100 to the first terminal 130_1 or the second terminal 130_2 of another battery cell 100. The bus bar 334 may electrically connect the second terminal 130_2 of the battery cell 100 to the first terminal 130_1 or the second terminal 130_2 of another battery cell 100. The bus bar 334 may be connected to the first terminal 130_1 and/or the second terminal 130_2 by welding, etc. The area other than the first terminal 130_1 and the second terminal 130_2 of the battery cell 100 may be insulated from the bus bar 334 by the bus bar holder 332.

The circuit 338 may be arranged between the bus bar 334 and the top plate 312. The circuit 338 may have a rectangle-like shape. The circuit 338 may be placed above the bus bar holder 332. At least, the circuit 338 may be placed adjacent to the area where the bus bar 334 is installed to be smoothly connected to the bus bar 334. The circuit 338 may be equipped with various components for obtaining information on the status of the battery cell 100, such as the voltage and/or temperature of the battery cell 100, and various components or circuits for controlling and/or managing the battery cell 100. The circuit 338 may be electrically connected to the exterior of the battery module 320 by a separate connector. The circuit 338 may include a battery management module (BMM). The BMM may be designed to monitor the status of the plurality of battery cells 100 included in the battery module 320 by monitoring the voltage, current, temperature, etc. of the battery cells 100 and to manage charging and discharging of the battery cell 100. The BMM may be placed within the battery module 320 as a separate component rather than being included in the circuit 338. For example, the BMM may be positioned on one side of the frame 310.

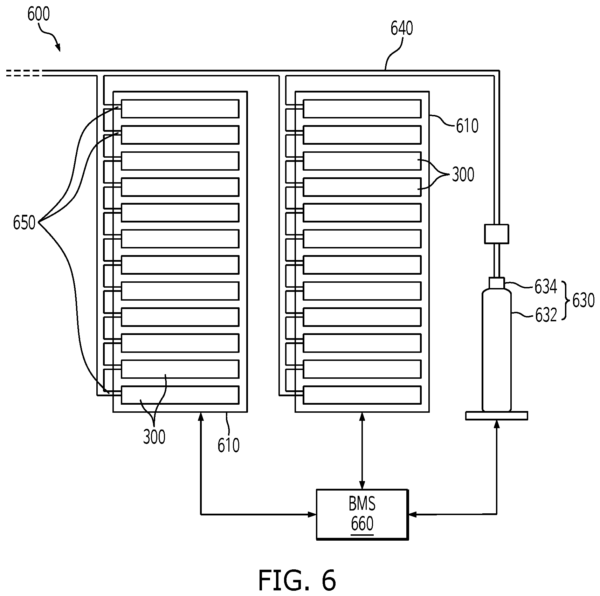

The BMM that monitors the battery module 320 may be connected to a battery management system (BMS) 660 (FIG. 6). According to embodiments, the BMS 660 may be connected to a plurality of BMMs. For example, the BMS 660 and the plurality of BMMs may be daisy-chained. That is, the plurality of BMMs monitoring each of a plurality of battery modules 320 may be collectively managed by the BMS 660. Accordingly, the BMS 660 may monitor the entire energy storage system including the plurality of battery modules 320.

In one embodiment, the battery pack 300 may include an insulating plate 350 positioned between the battery cells 100 adjacent to each other of the battery module 320. As illustrated, the insulating plate 350 may electrically or spatially isolate the plurality of battery cells 100 arranged in multiple rows. The insulating plate 350 may contain a plastic composite material.

Referring to FIG. 4, the extinguishing tube 340 may be placed between the connecting assembly 330 of the battery pack 300 and the top plate 326 in the accommodating space in the frame 310. The extinguishing tube 340 may include a tube cover 342 filled with a filler 344 and a plurality of spraying units 346 formed on the tube cover 342.

In embodiments, the tube cover 342 may be formed of a soft plastic having an internal space. The tube cover 342 may be formed in a shape corresponding to the shape of the frame 310 of the battery pack 300. The tube cover 342 may have one open end for filling the internal space with the filler 344. Here, after the internal space of the tube cover 342 has been filled with the filler 344 through the open end, the open end may be sealed by heat welding, etc. The tube cover 342 may be melted when a fire event occurs in at least some of the plurality of battery cells 100 of a battery module such as the battery module 320 in FIG. 3. Specifically, the tube cover 342 may be melted by the heat of gas emitted from the vent portion 124 when a fire event occurs in the battery cell 100.

In embodiments, the filler 344 may contain a flame-retardant material. For example, the filler 344 may contain a silicone having viscosity. However, the present disclosure is not limited thereto, and the filler 344 may contain a flame-retardant or non-flammable material having viscosity. When the tube cover 342 melts in the event of a fire event, the filler 344 may be discharged to cover a battery module 320 positioned under the connecting assembly. For example, when the filler 344 is silicone having viscosity, the movement of fragments resulting from a fire event within the battery pack 300 may be suppressed, effectively suppressing the spread of the fire.

In one embodiment, the plurality of spraying units 346 may be formed on a surface of the tube cover 342 facing the connecting assembly 330. As illustrated, the plurality of spraying units 346 may be formed in the shape of a funnel becoming narrower toward the connecting assembly 330 or a battery module 320. The plurality of spraying units 346 may be melted by the heat of gas emitted from the vent portion 124 when a fire event occurs. The plurality of spraying units 346 may each be positioned at a position corresponding to the vent portion 124 of each of the plurality of battery cells 100. Specifically, each of the plurality of spraying units 346 may be arranged one-to-one at a position corresponding to the vent portion 124 of each of the plurality of battery cells 100. The plurality of spraying units 346 may each be placed at a position corresponding to each of the vent portions 124, so that they may be quickly melted by the heat of the gas emitted from the vent portions 124 and may spray the filler accurately onto the battery cell 100 where a fire event has occurred. The plurality of spraying units 346 may contain a heat-sensitive member 348 having a lower melting point than the tube cover 342. As a result, the plurality of spraying units 346 may be melted before the tube cover 342 is melted, thereby allowing the filler 344 to be sprayed through the plurality of spraying units 346. As described above, the filler 344 made of a flame-retardant material having viscosity may be applied onto the upper part of the battery cell 100 before thermal runaway occurs due to fire, so that the movement of internal fragments generated by an explosion, etc. may be suppressed. Accordingly, it may be possible to prevent further spread of fire by internal fragments until an extinguishing agent is sprayed to extinguish the battery cell 100.

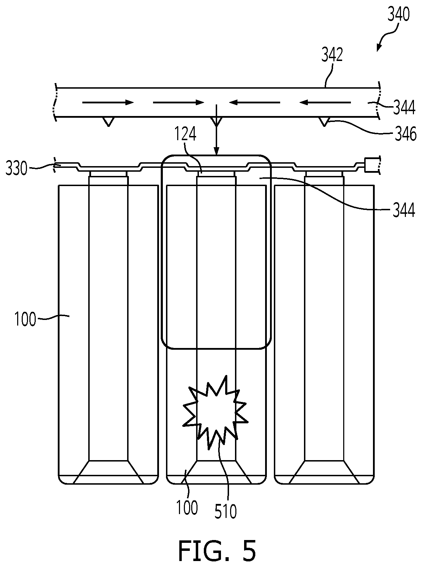

FIG. 5 shows how the filler 344 is sprayed from the extinguishing tube 340 onto the upper portion of the battery cell 100 according to some embodiments of the present disclosure. Here, the upper portion of the battery cell 100 refers to the portion of the battery cell 100 where the vent portion 124 is located based on the orientation in the drawing for explanatory purposes, and is not necessarily the upper portion based on a different orientation. This upper portion in FIG. 5 may be referred to by different terms depending on the viewpoint. Embodiments of the extinguishing tube 340 have been described with reference to FIG. 4. In addition, the components described with reference to FIG. 5 may be included in the battery pack 300 illustrated in FIG. 3.

Referring to FIG. 5, the extinguishing tube 340 may be placed above the plurality of battery cells 100 connected to each other by the connecting assembly 330. When a fire event 510 occurs in the battery cell 100, gas may be emitted from the vent portion 124 on the upper portion of the battery cell 100. Here, among the plurality of spraying units 346 of the extinguishing tube 340, the spraying unit 346 at a position corresponding to the vent portion 124 may be melted by the heat of the released gas. Because the melting point of the spraying unit 346 may be lower than the melting point of the tube cover 342, the spraying unit 346 may be melted before the tube cover 342 is melted. When the spraying unit 346 has been melted, the filler 344 in the tube cover 342 may be intensively sprayed onto the upper portion of the battery cell 100 where a fire event has occurred through the melted part of the spraying unit 346. Here, the filler 344 may be made of a flame-retardant material having viscosity and may thus effectively prevent the spread of fire by suppressing the flow of fragments of the battery cell 100 generated by the fire event.

FIG. 6 illustrates an energy storage system 600 according to some embodiments of the present disclosure. Referring to FIG. 6, the energy storage system 600 may include a plurality of battery packs 300 and at least one battery rack 610 that accommodates the plurality of battery packs 300.

The energy storage system 600 may include a battery management system (BMS) 660. The BMS 660 may be connected to a plurality of battery management modules (BMMs) included in each of the plurality of battery packs 300. For example, the BMS 660 and the plurality of BMMs may be daisy-chained. That is, the BMS 660 may collectively monitor and manage all of the plurality of battery packs 300 in the energy storage system 600.

The energy storage system 600 may include an extinguishing device 630. In order to respond to events occurring in the plurality of battery cells in the energy storage system 600, such as gas discharge from a vent and occurrence of a fire, the BMS 660 may operate an extinguishing system in response to signals and/or data sensed for each battery cell 100.

The extinguishing device 630 may include an agent container 632 and a main valve 634. In addition, the energy storage system 600 may include a main pipe 640 and a branch pipe 650 connected to the extinguishing device 630. The agent container 632 may be a type of storage container in which a fire extinguishing agent is stored. The agent container 632 may be a pressure container in which a high-pressure fire extinguishing agent is stored. The fire extinguishing agent may be stored in the agent container 632 by being pressured. As a result, when it is decided (e.g., by the BMS 660) to spray the fire extinguishing agent from the high-pressure agent container 632, the main valve 634 may be opened to spray the fire extinguishing agent.

The main valve 634 may serve to open and close a discharge portion of the agent container 632. The main valve 634 may control the supply of the fire extinguishing agent or the interruption to the supply according to the command of the BMS 660. When the main valve 634 has been opened, the fire extinguishing agent may be discharged from the agent container 632 and carried through the main pipe 640.

The main pipe 640 may extend from the agent container 632 to carry the fire extinguishing agent to each battery rack 610. The main pipe 640 may be positioned/installed adjacent to the exterior of each of a plurality of battery racks 610. As shown, the main pipe 640 may extend parallel to a direction in which the plurality of battery packs 300 are aligned in the battery rack 610 and may be installed adjacent to the battery rack 610. In other embodiments, the main pipe 640 may be branched so as to be inserted into each of the plurality of battery racks 610. In this case, the main pipe 640 may extend parallel to the direction in which the battery pack 300 is aligned within the battery rack 610 and may be installed in an upper area within the battery rack 610.

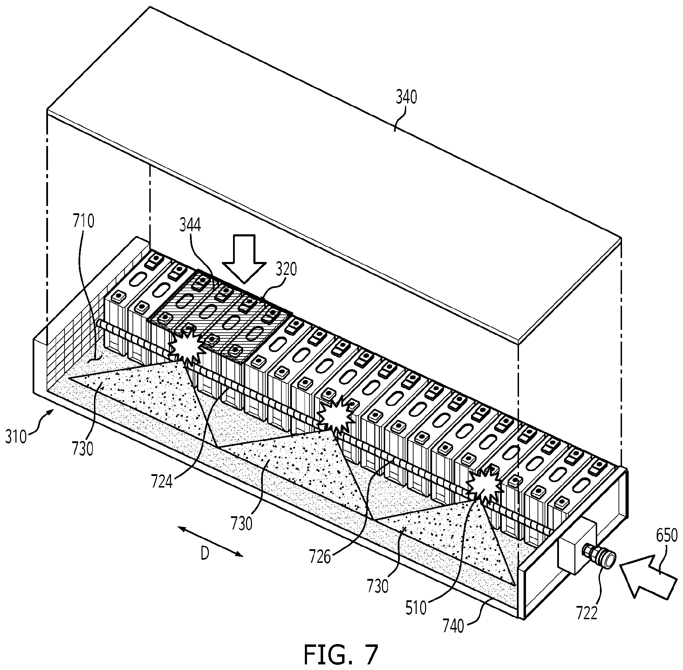

The main pipe 640 may be branched into the branch pipes 650 that are connected to each of the plurality of battery packs 620 in the battery rack 610. The branch pipes 650 may be connected to each of the plurality of battery packs 300 in the battery rack 610. The fire extinguishing agent transported through the branch pipe 650 may be transported to an extinguishing pipe 724 (FIG. 7) inside the battery pack 300 through a connecting pipe 722 (FIG. 7) connecting the branch pipe 650 and the battery pack 620. Thereafter, as the extinguishing pipe 724 melts, the fire extinguishing agent may be sprayed into the battery pack 300. The features of the connecting pipe 722 and the extinguishing pipe 724 of the battery pack 300 will be described in detail below with reference to FIG. 7.

FIG. 7 shows how a fire extinguishing agent 730 is sprayed from an extinguishing pipe 724 according to some embodiments of the present disclosure. Referring to FIG. 7, the battery pack 300 may include the extinguishing pipe 724 filled with a fire extinguishing agent and placed in an accommodating space 710 between the battery module 320 and the extinguishing tube 340 and a connecting pipe 722 connecting the outside of the battery pack 300 and the extinguishing pipe 724. In addition, the battery pack 300 may include a heating member 726 positioned adjacent to the extinguishing pipe 724.

In embodiments, the extinguishing pipe 724 may be connected to a branch pipe 650 through the connecting pipe 722. The extinguishing pipe 724 may be in the shape of a tube with a sealed interior, but the present disclosure is not limited thereto. The extinguishing pipe 724 may have an inner diameter and an outer diameter resulting from the thickness of its material. Specifically, the thickness portion of the extinguishing pipe 724 between the inner diameter and the outer diameter may be completely melted by the heating member 726, thereby forming a hole on the extinguishing pipe 724 so that the fire extinguishing agent may be discharged therefrom. Accordingly, the heating temperature of the heating member 726 may be higher than the melting point of the extinguishing pipe 724.

In embodiments, the type of the fire extinguishing agent is not limited as long as it is a material capable of extinguishing a fire caused by thermal runaway of a plurality of battery cells 100 in the battery module 320. For example, the fire extinguishing agent may include solid, liquid, and gaseous substances that have a cooling effect. Examples of gaseous extinguishing agents may include a carbon dioxide extinguishing agent, a halogen extinguishing agent, etc.; examples of solid extinguishing agents may include a phosphate extinguishing agent, a bicarbonate extinguishing agent, etc.; and examples of liquid extinguishing agents may include an acid-alkali extinguishing agent, a strengthened liquid extinguishing agent, a foam extinguishing agent, etc. Specifically, the fire extinguishing agent may be any one of heptafluoropropane, a water-based extinguishing agent for cooling extinguishment, and 1,1,1,2,3,3,3-hexafluoropropane. In addition, an appropriate extinguishing agent may be determined based on the capacity of the cell to prevent the spread of the thermal runaway.

In embodiments, the material of the extinguishing pipe 724 may not be particularly limited as long as it is a material that can melt at the heating temperature of the heating member 726. For example, the material of the extinguishing pipe 724 may include at least one of polypropylene (PP), linear low-density polyethylene (LLDPE), polyvinyl chloride (PVC), polyamide 6 (PA6), and polyamide 66 (PA66).

In embodiments, the extinguishing pipe 724 may be spaced apart from a side surface of the battery module 320 by a certain distance and extend in the length direction D of the frame 310. In the illustrated embodiment, the extinguishing pipe 724 may be positioned adjacent to the side surface of the battery module 320 and in the center of the frame 310, but the present disclosure is not limited thereto. The extinguishing pipe 724 may be placed at any location, such as adjacent to a side, lower, or upper surface of the battery module 320.

The heating member 726 may be in contact with the extinguishing pipe 724. For example, the heating member 726 may be wound around the extinguishing pipe 724. When the heating member 726 generates heat, the extinguishing pipe 724 in contact with the heating member 726 may melt. As a result, the fire extinguishing agent 730 may be sprayed from the extinguishing pipe 724.

In embodiments, when a fire event occurs inside the battery pack 300, after the filler 344 sprayed from a plurality of spraying units 346 of the extinguishing tube 340 covers the upper part of the battery module 320, the extinguishing pipe 724 may be melted so that the fire extinguishing agent 730 may be sprayed. Accordingly, the melting point of the extinguishing pipe 724 may be equal to or higher than the melting point of a plurality of spraying units 346 of the extinguishing tube 340.

According to some embodiments of the present disclosure, it may be possible to sense fire and spray a fire extinguishing agent to extinguish the fire at an early stage before thermal runaway occurs due to the fire. Accordingly, the thermal runaway may be prevented from spreading to nearby battery cells, thereby minimizing damage caused by the fire.

In embodiments, the battery pack 300 may further include a lower panel 740 installed on the lower surface of the space in the frame 310 to support the lower portion of the battery module 320. The lower panel 740 may block the fire extinguishing agent 730 discharged from the molten extinguishing pipe 724 from moving to the lower surface of the frame 310.

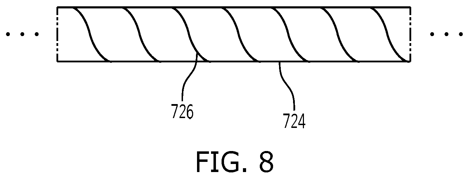

FIG. 8 shows an example of the heating member 726 in contact with the extinguishing pipe 724 according to an example embodiment of the present disclosure. Referring to FIG. 8, the heating member 726 may be in contact with the extinguishing pipe 724. Here, the heating member 726 may include at least one of a heating tape or a heating wire. Specifically, the heating member 726 may be spirally wound around the extinguishing pipe 724. In this case, the extinguishing pipe 724 may be melted due to the heating member 726, so that a fire extinguishing agent 730 within the extinguishing pipe 724 may be sprayed in all directions.

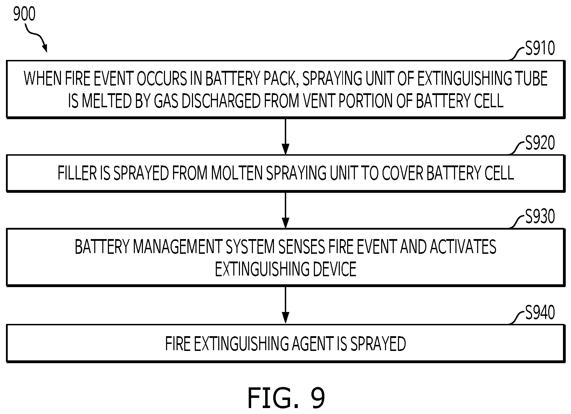

FIG. 9 is a flowchart 900 for illustrating an example of a method of suppressing a fire in an energy storage system 600 according to embodiments of the present disclosure. First, when a fire event occurs in a battery pack 300 within the energy storage system 600, a spraying unit 346 of an extinguishing tube 340 may be melted by gas discharged from a vent portion 124 of a battery cell 100 at S910. Referring to FIGS. 3, 4, and 6, the energy storage system 600 may include the battery rack 610 including the plurality of battery packs 300. When a fire event occurs in the battery pack 300, the spraying unit 346 of the extinguishing tube 340 may melt by the heat of the gas emitted from the vent portion 124 of the battery cell 100. Here, the melting point of the spraying unit 346 may be lower than the melting point of the tube cover 342. The spraying unit 346 may melt first so that the filler 344 may be intensively sprayed through the spraying unit 346.

Next, the filler may be sprayed from the molten spraying unit 346 to cover the battery cell 100 at S920. Referring to FIG. 5, the filler 344 may be sprayed from the spraying unit 346 placed above the target battery cell 100 where the fire event 510 has occurred to cover the battery cell 100.

Thereafter, a battery management system 660 may sense the fire event and activate an extinguishing device 630 at S930. Next, a fire extinguishing agent may be sprayed at S940. Referring to FIGS. 6 and 7, when the BMS 660 senses a fire event, it may discharge the fire extinguishing agent 730 from the extinguishing device 630. The fire extinguishing agent 730, which has been discharged, may be sprayed into the battery pack 300 through the main pipe 640 and the branch pipe 650. The branch pipe 650 may be connected to the extinguishing pipe 724 through the connecting pipe 722. The extinguishing pipe 724 may be melt by the heating member 726 placed adjacent to the extinguishing pipe 724, so that the fire extinguishing agent 730 may be sprayed into the battery pack 300.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A battery pack (300) comprising:
a frame (310) having an accommodating space (710) therein;
a battery module (320) comprising a plurality of battery cells (100) arranged in the accommodating space (710); and
an extinguishing tube (340) placed on the battery module (320),
wherein the extinguishing tube (340) comprises a tube cover (342) filled with a filler (344) and a plurality of spraying units (346) formed on the tube cover (342).

2. The battery pack (300) as claimed in claim 1, wherein each of the plurality of battery cells (100) comprises:
a case (110) having an opening (112) formed on one end;
a cap plate (122) coupled to the opening (112) of the case (110) and having a vent hole (123); and
a vent portion (124) placed on the vent hole (123), and
wherein each of the plurality of spraying units (346) is positioned at a position corresponding to the vent portion (124) of each of the plurality of battery cells (100).

3. The battery pack (300) as claimed in claim 1 or 2, wherein the filler (344) contains a flame-retardant material.

4. The battery pack (300) as claimed in claim 3, wherein the flame-retardant material contains silicone having viscosity.

5. The battery pack (300) as claimed in any preceding claim, wherein each of the plurality of spraying units (346) is formed in a shape of a funnel becoming narrower toward the battery module (320).

6. The battery pack (300) as claimed in any preceding claim, comprising:
a connecting assembly (330) arranged on the battery module (320) and comprising a plurality of bus bars that electrically connect the plurality of battery cells (100) and a bus bar holder that supports the plurality of bus bars; and
a top plate placed on the connecting assembly (330),
wherein the extinguishing tube (340) is disposed between the connecting assembly (330) and the top plate.

7. The battery pack (300) as claimed in any preceding claim, wherein the plurality of spraying units (346) comprise a heat-sensitive member (348) having a lower melting point than the tube cover (342).

8. The battery pack (300) as claimed in any preceding claim, comprising an extinguishing pipe (724) arranged in the accommodating space (710) between the battery module (320) and the extinguishing tube (340) and filled with a fire extinguishing agent.

9. The battery pack (300) as claimed in claim 8, comprising a heating member placed adj acent to the extinguishing pipe (724), wherein a melting point of the extinguishing pipe (724) is equal to or higher than a melting point of the plurality of spraying units (346).

10. The battery pack (300) as claimed in any preceding claim, comprising an insulating plate (350) positioned between battery cells (100) adjacent to each other among the plurality of battery cells (100).

11. An energy storage system (600) comprising:
one or more battery racks accommodating a plurality of battery packs (300);
an extinguishing device connected to the one or more battery racks; and
a battery management system, BMS, connected to the one or more battery racks and the extinguishing device,
wherein each of the plurality of battery packs (300) is a battery pack (300) as claimed in any preceding claim.

12. The energy storage system (600) as claimed in claim 11 when dependent on claim 8, wherein the extinguishing pipe (724) is connected to the extinguishing device.
